# EUROPÄISCHE PATENTSCHRIFT

(11) **EP 2 559 507 B1**
(45) Veröffentlichungstag und Bekanntmachung des Hinweises auf die Patenterteilung: **19.11.2014**
(21) Anmeldenummer: 11177776.9
(22) Anmeldetag: 17.08.2011
(51) Int. Cl.: B23B 31/16, B23Q 3/18

(54) **Manuell betätigbares Spannfutter**
Manually operated chuck
Mandrin pouvant être actionné manuellement

(43) Veröffentlichungstag der Anmeldung: 20.02.2013
(73) Patentinhaber: SMW-AUTOBLOK Spannsysteme GmbH, 88074 Meckenbeuren (DE)
(72) Erfinder: Helm, Peter, 88074 Meckenbeuren (DE)
(74) Vertreter: Engelhardt & Engelhardt

(56) Entgegenhaltungen:
- EP-A2- 0 085 782
- DE-A1- 3 304 876
- DE-A1-102006 027 988
- DE-B1- 2 004 889

## Beschreibung

Die Erfindung bezieht sich auf ein manuell betätigbares Spannfutter für Werkzeugmaschinen zur spanabhebenden Bearbeitung von rotationssymmetrischen Werkstücken nach dem Oberbegriff des Patentanspruches 1.

Aus der DE 2004 889 ist ein solches Spannfutter für Drehmaschinen mit einem Grundkörper zu entnehmen, in dem drei Spannbacken radial bewegbar eingesetzt sind. Der Grundkörper ist lösbar mit der Werkzeugmaschine verbunden. Die Spannbacken werden mittels eines Treibringes in dem Grundkörper hin und her bewegt und dienen zum Einspannen von rotationssymmetrischen Werkstücken. Die Spannbacken sind in einem Teilungswinkel von 120 ° auf dem Grundkörper angeordnet.

Zwei der drei Spannbacken sind mittels einer Keilstange unmittelbar trieblich mit dem Treibring verbunden und werden durch die Rotation des Treibringes und aufgrund der Schrägverzahnung zwischen der jeweiligen Keilstange und der Spannbacke linear in dem Grundkörper verschoben.

Der Treibring ist formschlüssig oder trieblich mit einer in dem Grundkörper eingesetzten Gewindespindel verbunden, die senkrecht zu der Längsachse des Grundkörpers verschiebbar in diesem gelagert ist. Aufgrund der manuell von außen betätigbaren Gewindespindel, beispielsweise mittels eines Schraubenschlüssels als Werkzeug, wird ein derartiges Spannfutter auch als handbetätigtes Spannfutter bezeichnet, denn die aufzubringende Einspannkraft wird mit Hilfe des Werkzeuges manuell erzeugt.

Einer der drei Spannbacken ist unmittelbar trieblich über die schräg verzahnte Keilstange mit der Gewindespindel gekoppelt und wird folglich durch die Bewegung der Gewindespindel und synchron zu den beiden anderen Spannbacken bewegt.

Als nachteilig und als besondere technische Herausforderung hat sich bei derartigen manuell betätigbaren Spannfuttern in den letzten Jahrzehnten herausgestellt, dass die Zentrierung des Werkstückes bezogen auf die Längsachse des Grundkörpers nicht optimal eingestellt werden kann. Zwischen den einzelnen, für die Betätigung der Spannbacken erforderlichen Bauteilen, also der Gewindespindel, dem Treibring, den jeweiligen Keilstangen und deren Spannbacken entsteht nämlich herstellungsbeding eine Fehlertolleranz, die dazu führt, dass die Spannbacken die zentrische Fixierung des Werkstückes nicht ausreichend bewerkstelligen können. Das vorhandene Spiel führt nämlich permanent dazu, dass das Werkstück bei dessen Rotation und Bearbeitung aus der eingestellten Position in einem Grenzbereich von etwa 5 µm herausrutscht. Eine geringere Fehlertoleranz von 5 µm lässt sich ausschließlich mit enormen Fertigungskosten erreichen, die dann dazu führen, dass die Spannfutter mit einer geringeren Fehlertoleranz kostengünstiger herzustellen sind als Spannfutter mit einer höheren Fehlertoleranz. Je höher jedoch die Fehlertoleranz ist, desto grö-ßer werden die Ungenauigkeiten bei der spanabhebenden Bearbeitung an dem Werkstück.

Die bekannten, handbetätigten Spannfutter ermöglichen zwar bei klein bauenden Werkstücken, dass das vorhandene Spiel, das zwischen den einzelnen die Spannbacken antreibenden Bauteilen, beispielsweise dem Treibring, den Keilstangen und der Gewindespindel, vorhanden ist, auszugleichen ist. Je größer jedoch der Außenumfang des Treibringes baut, desto größer ist betragsmäßig das vorhandene Spiel zwischen diesem und den einzelnen zur Betätigung der Spannbacken erforderlichen Bauteilen. Auch bei leicht bauenden Werkstücken kann das Lagerspiel ausgeglichen werden, denn solche Werkstücke üben keine wesentlichen Kräfte auf die Spannbacken aus, so dass diese unter Umständen in ihrer eingestellten Position verbleiben. Bei schwer und groß bauenden Werkstücken ist es demnach nicht möglich, das vorhandene Spiel zwischen den zur Einspannung des Werkstückes notwendigen Bauteilen auszugeichen, so dass eine permanente Fehlertoleranz vorliegt.

Diese Lagerspiele sind als Ungenauigkeiten bei der Einspannung des Werkstückes nicht auszugleichen, sondern diese Ungenauigkeiten übertragen sich auf die Einspannsituation des Werkstückes derart, dass zwischen der Position des Werkstückes und dem Zentrum des Spannfutters eine erhebliche Ungenauigkeit entsteht, die bei der Bearbeitung des Werkstückes zu Ungenauigkeiten an diesem führt. Eine präzise Fertigung und Bearbeitung des Werkstückes ist demnach nicht ohne weiteres möglich.

Als weiterer Nachteil bei den bekannt gewordenen handbetätigten Spannfuttern hat sich herausgestellt, dass während des oftmals langwierigen und erheblich aufwendigen Bearbeitungsprozesses Einspannfehler entstehen, denn das zu bearbeitenden Werkstück wird während des Bearbeitungsprozesses leichter, da das Material von diesem abgenommen ist. Solch spanabhebenden materialreduzierenden Arbeitsvorgänge führen dann dazu, dass die ursprüngliche Position des Werkstückes gegenüber dem Spannfutter und damit gegenüber der Werkzeugmaschine verändert ist. Eine Nachjustierung des Werkstückes ist oftmals zeitaufwendig und kompliziert zu bewerkstelligen.

Da die eingespannten Werkstücke durch die Werkzeugmaschine zu deren Bearbeitung in Rotation versetz sind, ist bei einem Spannfutter, das drei in 120° Winkelstellung zueinander beabstandete Spannbacken aufweist, insbesondere bei äußerst schwer und groß bauenden Werkstücken von beispielsweise 20 Tonnen Eigengewicht, festgestellt worden, dass eine Spannbacke, die in einer bestimmten Winkelposition des Spannfutters ausschließlich die Gewichtskraft des Werkstückes zu tragen hat, nicht gewährleistet ist, dass durch diese Spannbacke das Werkstück zuverlässig gehalten ist. Vielmehr ist durch die Gewichtskraft des Werkstückes die Spannkraft der einzelnen Spannbacke überschritten, so dass diese nach außen gedrückt und somit die auf das Werkstück einwirkende Spannkraft gelöst ist. Das Werkstück ist demnach nicht zuverlässig in dem Spannfutter gehalten, so dass dessen gewollte Einspannposition nicht beizubehalten ist.

Es ist daher Aufgabe der Erfindung, ein langjährig bewährtes handbetätigtes Spannfutter der eingangs genannten Gattung derart weiterzubilden, dass durch dieses zum einen eine exakte zentrische Positionierung des einzuspannenden Werkstückes bezogen auf die Längsachse des Spannfutters erreichbar ist und dass durch dieses zum anderen eine während des Bearbeitungsprozesses permanent vorzunehmende Zentriereinstellmöglichkeit gegeben ist. Darüberhinaus soll durch das erfindungsgemäße Spannfutter eine zuverlässige und dauerhafte Abstützung auch von äußerst schweren Werkstücken mit einem Innen- oder Außendurchmesser von mindestens 0,5 Metern möglich sein.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass seitlich neben den Spannbacken mindestens eine Zentriereinrichtung vorgesehen ist, die eine radial auf das Werkstück gerichtete Zentrierkraft aufbringt, ist das Werkstück, nachdem dieses in den drei Spannbacken eingespannt ist, exakt zentrierbar, denn durch die jeweilige Zentriereinrichtung ist die Längsachse des Werkstückes fluchtend zu der Längsachse des Spannfutters positionierbar, ohne dass die Zentrierkraft auf die Spannbacken einwirkt. Die Spannbacken sind nämlich über die Keilstange formschlüssig mit dem Treibring und der Gewindespindel verbunden. Da jedoch der Treibring, die Keilstange und die Gewindespindel in dem Grundkörper des Spannfutters mit einem herstellungsbedingten Spiel gelagert sind, ist dieses Spiel durch die jeweilige Zentriereinrichtung ausgleichbar. Folglich wirkt die Zentrierkraft der jeweiligen Zentriereinrichtung nicht auf die Spannbacken und damit auf die die Spannbacken antreibenden Bauteile, sondern gleicht vielmehr das dort vorhandene Lager-Spiel bzw. die Fehlertoleranzen, die insbesondere bei äußerst groß bemessenen Außendurchmessern etwa im Bereich von 5 µm liegen, aus. Diese für Präzisionsbauteile erheblichen Fehlertoleranzen können demnach durch die Zentriereinrichtungen derart ausgeglichen sein, dass die Werkstücke in dem Spannfutter exakt zentrisch zu diesem eingebaut werden können.

Die vorhandenen Fehlertoleranzen des Spannfutters werden somit nicht mehr während des Bearbeitungsprozesses auf das Werkstück übertragen, sondern sind ausgeglichen.

Da während des Bearbeitungsprozesses von dem Werkstück mitunter die Hälfte des vorhandenen Materiales und damit die Hälfte an Eigengewicht spanabhebend abgetragen ist, reduziert sich das Eigengewicht des Werkstückes im Verlauf des Bearbeitungsprozesses, so dass dadurch auch die geometrischen Einspannverhältnisse beeinflusst sind. Da die Zentriereinrichtungen unabhängig von den Spannbacken bewegbar sind, können solche Veränderungen der Einspannverhältnisse durch die Zentriereinnchtungen während des Bearbeitungsprozesses kurzfristig ausgeglichen sein, so dass das eingespannte Werkstück permanent exakt zentrisch zu dem Spannfutter positionierbar ist, ohne die von den Spannbacken aufgebrachte Spannkraft zu verändern.

Darüber hinaus wirkt die Zentriereinrichtung auf die Oberfläche des eingespannten Werkstückes, so dass das Werkstück nicht nur durch die Spannbacken, sondern auch durch die Zentriereinrichtungen am Grundkörper des Spannfutters abgestützt ist.

Es ist besonders vorteilhaft, wenn drei Spannbacken in einem Winkel von 120° zueinander und zwischen zwei benachbarten Spannbacken jeweils eine oder zwei der Zentriereinrichtungen angeordnet ist bzw. sind. Diese Konstruktion bewirkt nämlich, dass auf das Werkstück sechs oder neun in einem Winkel von 60° bzw. 40° zueinander verlaufenden Spannbacken und Zentriereinrichtungen einwirken, so dass das Werkstück sowohl durch die Spannbacken als auch durch die Zentriereinrichtungen zuverlässig an dem Spannfutter abgestützt ist.

Die Zentriereinrichtungen können unterschiedlich konstruktiv ausgestaltet sein. Beispielhaft, jedoch nicht ausschließlich, sind die Zentriereinrichtungen als Keile oder als hydraulisch betätigbare Spannstifte oder als Gewindespindeln ausgestaltet. Gemeinsam ist diesen Zentriereinrichtungen, dass eine radial gerichtete Zentrierkraft auf die Oberfläche des Werkstückes einwirkt und durch diese Zentrierkraft eine Verschiebbung des Werkstückes und damit der Längsachse des Werkstückes bezogen auf die Längsachse des Spannfutters ermöglicht ist.

Darüber hinaus können die Zentriereinrichtungen synchron oder unabhängig voneinander betätigt sein, so dass in Abhängigkeit von der Einspannsituation, die von den Spannbacken erreicht ist, eine exakte Ausrichtung des Werkstückes durch die eine oder durch mehrere der Zentriereinrichtungen erfolgt.

Aufgrund dieser Einstellmöglichkeiten ist erreicht, dass die Position des Werkstückes an die Materialreduzierung und damit an die durch die Verringerung der Gewichtskraft hervorgerufenen Lageveränderung des Werkstückes bezogen auf den Mittelpunkt des Spannfutters durch die Zentriereinrichtungen erneut ausgerichtet werden kann. Folglich ist das Werkstück auch während des Bearbeitungsprozesses permanent exakt zentrisch zu dem Spannfutter positioniert; ein Aus- und Einspannen des Werkstückes ist nicht erforderlich, denn das Werkstück ist durch die Spannbacken des Spannfutters während der Bearbeitungsprozesse permanent gehalten. Lediglich die Zentriereinrichtungen sind zur erneuten exakten zentrischen Positionierung des Werkstückes zu betätigen.

In der Zeichnung sind zwei erfindungsgemäße Ausführungsbeispiele eines Spannfutters mit drei unterschiedlich ausgestalteten Zentriereinrichtungen dargestellt, die nachfolgend näher erläutert sind. Im Einzelnen zeigt:
- Figur 1: ein erstes Ausführungsbeispiel eines Spannfutters mit drei Spannbacken und drei seitlich versetzt zu den Spannbacken angeordneten schematisch dargestellten Zentriereinrichtungen, in Draufsicht,
- Figur 2: das Spannfutter gemäß Figur 1 entlang der Schnittlinie II-II,
- Figur 3: das Spannfutter gemäß Figur 2 entlang der Schnittlinie III-III,
- Figur 4a: eine erste Ausführungsvariante einer Zentriereinrichtung gemäß Figur 1, im Schnitt,
- Figur 4b: eine zweite Ausführungsvariante einer Zentriereinrichtung gemäß Figur 1, im Schnitt,
- Figur 4c: eine dritte Ausführungsvariante einer Zentriereinrichtung gemäß Figur 1, im Schnitt und
- Figur 5: ein zweites Ausführungsbeispiel eines Spannfutters mit drei Spannbacken und drei seitlich versetzt zu den Spannbacken angeordneten schematisch dargestellten Zentriereinrichtungen, im Schnitt.

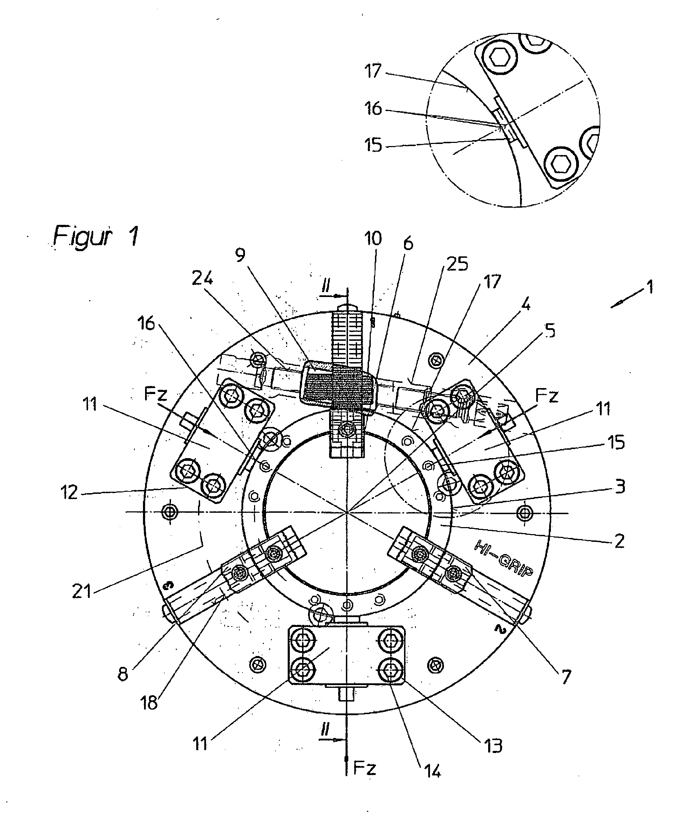

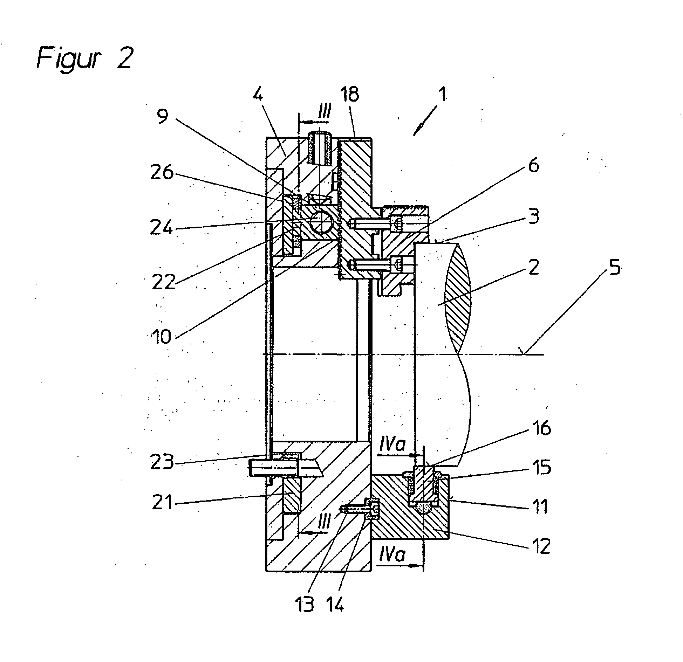

In den Figuren 1, 2 und 3 ist ein Spannfutter 1 abgebildet, durch das ein rotationssymetrisches vorzugsweise rundes Werkstück 2 an einer nicht dargestellten Werkzeugmaschine zu dessen spanabhebender Bearbeitung von außen gehalten ist. Das Spannfutter 1 besteht aus einem Grundkörper 4, dessen Längsachse mit der Bezugsziffer 5 versehen ist. In auf die Längsachse 5 gerichteten und linear ausgestalteten Führungsnuten 18 sind drei Spannbacken 6, 7 und 8 radial verschieblich gelagert. Die Spannbacken 6, 7 und 8 werden jeweils über eine Keilstange 9, die in dem Grundkörper 4 in üblicher Weise bewegbar angeordnet ist, angetrieben. Zwischen jeder der Keilstangen 9 und der Spannbacken 6, 7 oder 8 ist eine Schrägverzahnung 10 vorgesehen, so dass zwischen jeder der Spannbacken 6, 7 oder 8 und der jeweiligen Keilstange 9 eine formschlüssige Wirkverbindung besteht.

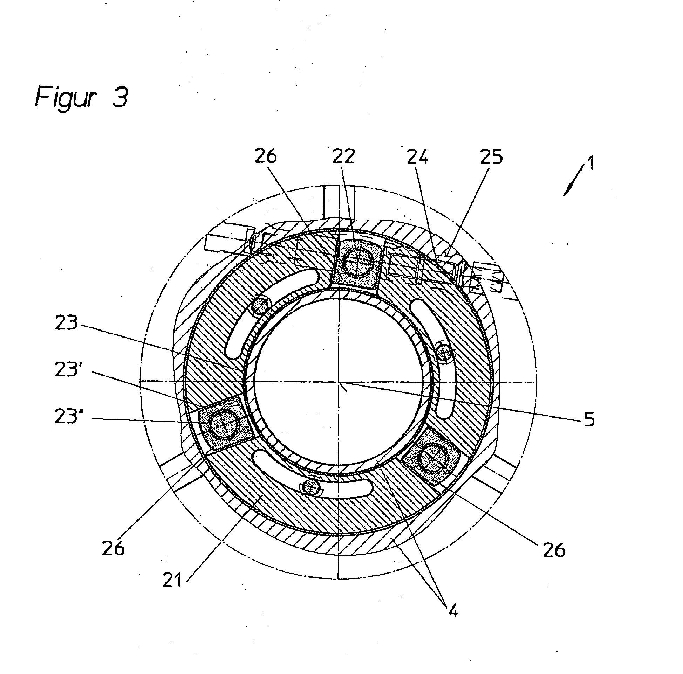

Zwei der drei Keilstangen 9, dies kann insbesondere Figur 3 entnommen sein, sind über einen Treibring 21 antreibbar. Der Treibring 21 ist dazu üblicherweise begrenzt verdrehbar in dem Grundkörper 4 gelagert und trieblich mit einer in einen in dem Grundkörper 4 eingearbeiteten Aussperrung 25 verschiebbar gehaltene Gewindespindel 24 verbunden. Sobald der Treibring 21 mit Kraft, die rotierend um die Längsachse 5 des Grundkörpers wirkt, beaufschlagt ist, in dem nämlich die Gewindespindel 24 in der Aussparung 25 hin und her bewegt ist, entsteht eine Verschiebung der beiden Keilstangen 9, denn diese sind über einen an diese angeformten Bolzen 22 und einen Nutenstein 26 mit dem Treibring 21 trieblich gekoppelt.

Die unmittelbar trieblich mit der Gewindespindel 24 in Wirkverbindung stehende Keilstange 9 verschiebt bei Betätigung den Spannbacken 6. Über die jeweils schräg verlaufenden Verzahnungen 10 werden dennoch die Spannbacken 6,7 und 8 radial in der Führungsnute 18 auf das Werkstück 2 zugestellt oder von diesem wegbewegt. Diese Bewegungen erfolgen folglich synchron.

Der Treibring 21 ist trieblich mit den Keilstangen 9 der beiden Spannbacken 7 und 8 über die Bolzen 22 formschlüssig fixiert. Die Bolzen 22 sind wiederum trieblich, also formschlüssig, mit der jeweiligen Keilstange 9 über die Nutensteine 26 verbunden, so dass durch die Rotation des Treibringes 21 ausgelöst durch die axiale Verschiebung der Gewindespindel 24 die Keilstangen 9 in den Grundkörper 4 verschoben sind. Aufgrund der vorhandenen Schrägverzahnung 10 zwischen der Keilstange 9 und den Spannbacken 7 und 8 werden diese synchron zu der Spannbacke 6 auf das Werkstück 2 zugestellt, und zwar so lange, bis ein Wirkkontakt zwischen den drei Spannbacken 6, 7 und 8 und dem Werkstück 2 entsteht, durch den eine ausreichende Spannkraft zur Halterung des Werkstückes 2 auf dieses ausgeübt ist.

Durch die Spannbacken 6, 7 und 8 ist somit das Werkstück 2 an dem Spannfutter 1 drehfest gehalten.

Das rotationssymetrische Werkstück 2 weist eine Längsachse auf, die möglichst konzentrisch zu der Längsachse 5 während des gesamten Bearbeitungsprozesses des Werkstückes 2 angeordnet sein soll. Aufgrund des in Figur 3 schematisch dargestellten Spiels 23, 23', 23" zwischen dem Grundkörper 4 der Gewindespindel 24, des Treibrings 21, den Keilstangen 9 und den Spannbacken 6, 7 und 8 kann jedoch oftmals eine solche gewünschte konzentrische oder koaxiale Einspannung des Werkstückes 2 an dem Spannfutter 1 nicht erreicht werden. Insbesondere bei äu-ßerst groß bemessenen und schweren Werkstücken 2, die einen Außendurchmesser von mehr als 0,5 Meter und ein Eigengewicht von mehr als fünf Tonnen aufweisen, sind die herstellungsbedingten Fehlertoleranzen nicht auszugleichen, so dass die Fehlertoleranzen 23, 23',23" zwischen den Keilstangen 9 und dem Treibring 21 auszugleichen sind. Dieses vorhandene Spiel 23, 23', 23" führt bei der Zustellung der Spannbacken 6, 7 und 8 dazu, dass die Längsachse des Werkstückes 2 nicht fluchtend oder koaxial zu der Längsachse 5 des Grundkörpers 4 angeordnet werden kann.

Wenn jedoch nunmehr das Werkstück 2 bearbeitet werden soll, führt diese Einspanungsneuigkeit bei der Einspannung des Werkstückes 2 zu Bearbeitungsfehlem an dem Werkstück 2. Insbesondere für Präzisionsteile, beispielsweise Läufer oder Wellen in Elektromotoren oder sonstigen hochwertigen Maschinen, Anlagen oder dgl., sind jedoch solche Fehlertoleranzen nicht tolerierbar. Die bekannten Fehlertoleranzen führen beispielsweise zu einer Abweichung von mindestens 5 µm. Diese Abweichung von 5 µm wird demnach auf die Einspannsituation des Werkstückes 2 an dem Spannfutter 1 übertragen, so dass bei der Bearbeitung des Werkstückes 2 diese Fehlertoleranzen aufgrund der vorherrschenden Einbausituation gleichfalls auftreten.

Darüber hinaus wird während des spanabhebenden Bearbeitungsprozesses an dem Werkstück 2 Material von diesem abgenommen, so dass sich die Eigengewichtskraft des Werkstückes 2 während des Bearbeitungsprozesses ständig verringert. Diese Material reduzierende Bearbeitung führt somit dazu, dass die geometrischen Einspannsituationen verändert sind.

Um sowohl die exakte Position des Werkstückes 2, nämlich zentrisch, fluchtend oder koaxial zu der Längsachse 5 des Spannfutters 1 einstellen zu können, sind drei Zentriereinrichtungen 11 vorgesehen, durch die eine radial wirkende Zentrierkraft F_{z} auf das Werkstück 2 einwirkt, um durch diese die vorhandenen Spiele 23, 23', 23" auszugleichen. Die Zentrierkraft F_{z} soll demnach nicht auf die Spannbacken 6, 7 oder 8 einwirken, sondern ausschließlich die vorhandenen Längsabweichungen ausgleichen und das Werkstück 2 derart zu der Längsachse 5 ausrichten, dass die Längsachse des Werkstückes 2 fluchtend oder koaxial zu der Längsachse 5 des Spannfutters 1 verläuft. Beispielsweise mittels elektrischen Sensoren oder sonstigen Berührungsgebern kann festgestellt sein, dass die Zentriereinrichtungen 11 das Werkstück 2 in der gewünschten Einspannsituation fixieren und die jeweilige Zentriereinrichtung 11 festgestellt ist.

Die Zentriereinrichtung 11 besteht aus einem Gehäuse 12, das lösbar an dem Grundkörper 4 des Spannfutters 1 anbringbar ist. Zu diesem Zweck sind in den Grundkörper 4 eine Vielzahl von Bohrungen 13 eingearbeitet und in dem Gehäuse 12 sind Durchgangsöffnungen vorgesehen, die von Schrauben 14 durchgriffen sind, um das Gehäuse 12 an dem Grundkörper 4 anzuschrauben. In dem Gehäuse 12 ist des Weiteren ein Zentrierstift 15 eingesetzt, der aus dem Gehäuse 12 absteht und eine Zentrierfläche 16 aufweist.

Die Gehäuse 12 der drei Zentriereinrichtungen 11 sind derart an dem Grundkörper 4 anzuordnen, dass die Zentrierflächen 16 der jeweiligen Zentrierstifte 15 auf einer gemeinsamen Kreisbahn 17 verlaufen, die etwas größer bemessen ist als der Au-ßenradius des zu bearbeitenden Werkstückes 2. Die Spannbacken 6, 7 und 8 sind zunächst dazu vorgesehen, das Werkstück 2 aufzunehmen und dieses an dem Spannfutter 1 zu fixieren. Sobald die Einspannung des Werkstückes 2 durch die Spannbacken 6, 7 und 8 in bekannter Weise bewerkstelligt ist, sind die Zentrierstifte 15 der jeweiligen Zentriereinrichtung 11 radial auf das Werkstück 2 zu zu stellen.

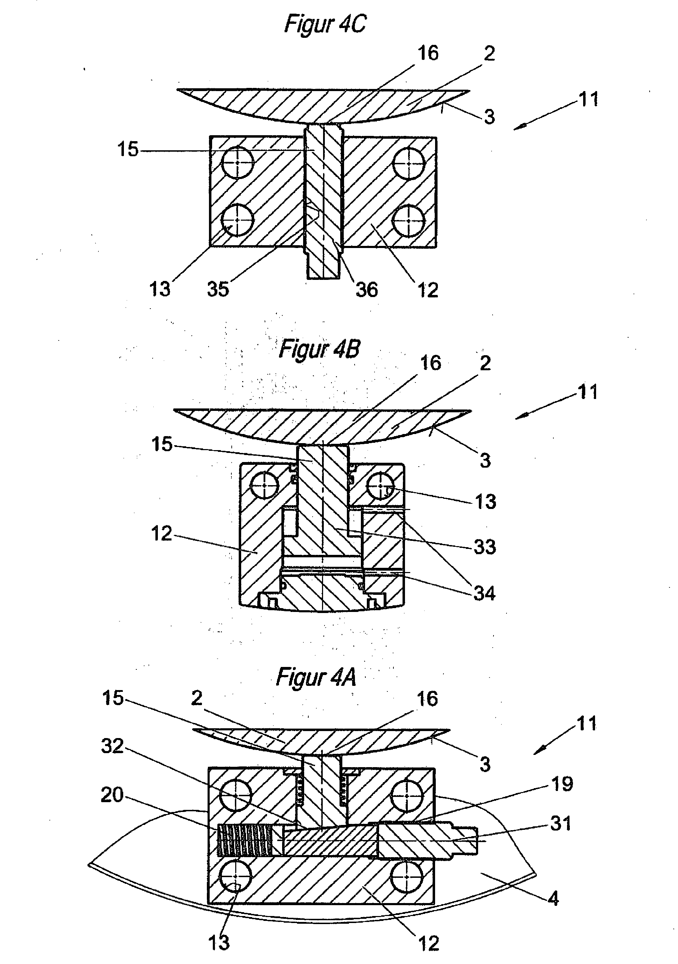

In den Figuren 4a, 4b und 4c sind drei unterschiedliche konstruktive Ausgestaltungen der jeweiligen Zentriereinrichtung 11 abgebildet.

In Figur 4a ist in dem Gehäuse 12 der Zentriereinrichtung 11 ein Keil 31 eingesetzt, der eine sich verjüngende Spannfläche 32 aufweist. Der Zentrierstift 15 liegt auf der Spannfläche 32 des Spanndornes 31 an, so dass beim Einschieben des Keiles 31 die bereits erläuterte radial wirkende Zentrierkraft F_{z} entsteht, durch die der Zentrierstift 15 in Richtung auf das Werkstück 2 zugestellt und dieses mit der Zentrierkraft beaufschlagt ist. Der Keil 31 wird durch einen in das Gehäuse 12 eindrehbaren Bolzen 31' gegen die Kraft einer Feder 20 gedrückt. In einem in das Gehäuse 12 eingearbeitenden Spanngewinde 19' ist der Bolzen 31' gehalten, so dass beim Herausdrehen des Bolzens 31' eine Rückstellkraft durch die Feder 20 auf den Keil 31 aufgebracht ist, durch die der Keil 31 aus dem Gehäuse 12 herausgedrückt ist. Auch zwischen dem Gehäuse 12 und dem Zentrierstift 15 ist eine Feder vorgesehen, durch die der Zentrierstift 15 beim Lösen des Keils 31 in seine Ausgangsstellung zurückbewegt ist.

Aus Figur 4b ist ersichtlich, dass die Zentriereinrichtung 11 aus einem Hydraulikkolben 33 gebildet ist, an dem der Zentrierstift 15 angeformt ist. Über zwei Hydraulikanschlüsse 34 werden die beiden Räume, die von dem Hydraulikkolben 33 getrennt sind, mit Hydraulikflüssigkeit gefüllt bzw. wechselweise dazu entleert, so dass der Hydraulikkolben 33 über die Hydraulikanschlüsse 34 mit der radial wirkenden Zentrierkraft F_{z} beaufschlagt ist, durch die der Zentrierstift 15 in Richtung auf das Werkstück 2 zugestellt bzw. wegbewegbar ist.

In Figur 4c ist die konstruktive Ausgestaltung der Zentriereinrichtung 11 derart vorgenommen, dass in einem in dem Gehäuse 12 eingearbeiteten Innengewinde 35 eine Gewindespindel 36 eingeschraubt ist, an die der Zentrierstift 15 angeformt ist. Durch Eindrehen der Gewindespindel 36 wird demnach der Zentrierstift 15 in Richtung auf das Werkstück 2 zugestellt.

Den drei konstruktiven Ausgestaltungen der Zentriereinrichtung 11 nach den Figuren 4a, 4b, 4c ist demnach gemeinsam, dass die an dem Zentrierstift 15 vorgesehene Zentriernäche 16 aus der Ausgangslage, die der Kreisbahn 17 entspricht, in Richtung auf das Werkstück 2 zugestellt ist und durch die Zentrierfläche 16 eine radial von au-ßen und innen wirkende Zentrierkraft F_{z} auf das Werkstück 2 ausgeübt ist. Während der Zustellung des jeweiligen Zentrierstiftes 15 ist das Werkstück 2 durch die drei Spannbacken 6, 7 und 8 an dem Spannfutter 1 und demnach an der nicht dargestellten Werkzeugmaschine gehalten. Das zwischen dem Grundkörper 4 und dem Betätigungselement 21 vorhandene Spiel 23 kann folglich durch die Bewegungen des jeweiligen Zentrierstiftes 15 ausgeglichen sein. Die Zentrierstifte 15 der jeweiligen Zentriereinrichtung 11 können unabhängig voneinander oder synchron zueinander verstellt und angetrieben sein.

In dem gezeigten Ausführungsbeispiel sind die drei Spannbacken 6, 7 und 8 in einer Winkelposition von 120° zueinander an dem Grundkörper 4 angeordnet. Zwischen zwei benachbarten Spannbacken 6, 7 oder 8 ist jeweils zentriert eine der Zentriereinrichtungen 11 vorgesehen, so dass diese zueinander ebenso eine Winkelposition von 120° einnehmen und die drei Spannbacken 6, 7 und 8 zu den drei Zentriereinrichtungen 11 in einem Winkel von 60° angeordnet sind.

Durch die spanabhebende Bearbeitung an dem Werkstück 2 ist dessen Eigengewicht verringert, so dass sich die geometrischen Einspannsituationen verändern. Die drei Spannbacken 6, 7 und 8 stützen dabei das Werkstück 2 an dem Spannfutter 1 ab. Durch die Zustellung der drei Zentriereinrichtungen 11 ist permanent eine Neupositionierung des Werkstückes 2 bezogen auf die Längsachse 5 des Spannfutters 1 möglich. Die Gewichtsveränderungen des Werkstückes 2 können daher durch die Zentriereinrichtungen 11 ausgeglichen werden, ohne dass die Position der drei Spannbacken 6, 7 und 8 zu verändern ist.

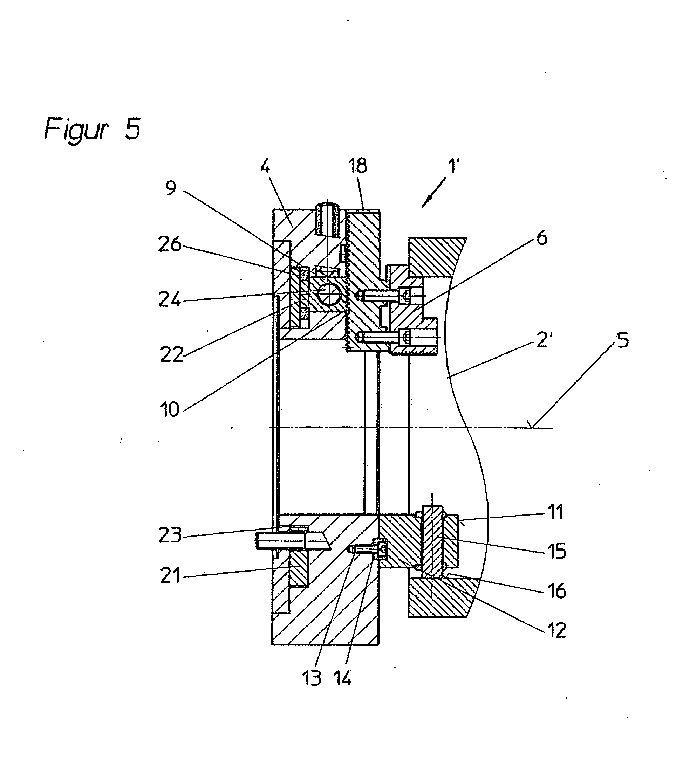

In Figur 5 ist ein Spannfutter 1' dargestellt, durch die ein rotationssymetrisches Werkstück 2' eingespannt ist. Das Werkstück 2' ist dabei als rotationssymetrischer Hohlkörper ausgebildet. Die drei Spannbacken 6, 7 und 8 sind während der Einspannposition im Inneren des Werkstückes 2' angeordnet und üben eine radial nach außen gerichtete Spannkraft auf das Werkstück 2' aus.

Die drei Zentriereinrichtungen 11 sind im Inneren des Werkstückes 2' an dem Spannfutter 1' befestigt, so dass durch diese eine radial nach außen gerichtete Zentrierkraft F_{z} auf das Werkstück 2' einwirkt.

Die Zentrierflächen 16 der drei Zentrierstifte 15 liegen auf der gemeinsamen Kreisbahn 17, deren Radius kleiner bemessen ist als der Innenradius des Werkstückes 2'.

Die jeweilige Zentriereinrichtung 11 ist von außen, beispielsweise mittels eines Werkzeuges, das durch das Werkstück 2' hindurchgeführt werden kann, betätigbar, um die Position der jeweiligen Zentriereinrichtung 11 manuell einzustellen. Es ist auch vorstellbar, dass die jeweilige Zentriereinrichtung 11 mittels der in den Figuren 4a, 4b und 4c erläuterten konstruktiven Ausgestaltungen versehen ist. Die jeweilige Zentriereinrichtung 11 ist beispielsweise mittels der in Figur 4b abgebildeten hydraulischen Antriebseinheit betätigbar, ohne dass das Werkstück 2' zu durchgreifen ist.

## Patentansprüche

1. Manuell betätigbares Spannfutter (1,1') für Werkzeugmaschinen zur spanabhebenden Bearbeitung von rotationssymmetrischen Werkstücken (2),
- mit einem an der Werkzeugmaschine befestigbaren Grundkörper (4), an dem radial verschiebbare Spannbacken (6, 7, 8) zur Fixierung des Werkstückes (2) angebracht sind und in den eine Aussparung (25) eingearbeitet ist, die senkrecht zu der Längsachse (5) des Grundkörpers (4) verläuft,
- mit einer in der Aussparung (25) verschiebbar gelagerten Gewindespindel (24), die von außen zu deren Positionsveränderung zugänglich ist,
- mit einer in dem Grundkörper (4) im Bereich der Gewindespindel (24) angeordneten Keilstange (9), die formschlüssig mit der Gewindespindel (24) und einer der Spannbacken (6) verbunden ist,
- mit einem in dem Grundkörper (4) verdrehbar gelagerten Treibring (21), der formschlüssig mit der Gewindespindel (24) und jeweils einer weiteren der beiden anderen Spannbacken (7, 8) zugeordneten Keilstangen (9) formschlüssig verbunden ist und
- mit einem vorgegebenen Spiel (23, 23', 23") zwischen der Gewindespindel (24) und dem Treibring (21) und/oder der Gewindespindel (24) und einer der Keilstangen (9) und/oder zwischen dem Treibring (21) und den jewertigen Keilstangen (9) der Spannbacken (7, 8),
**dadurch gekennzeichnet,**
- **dass** seitlich versetzt zu einer oder mehreren der Spannbacke (6, 7 oder 8) bzw. Spannbacken (6, 7 und 8) jeweils mindestens eine an dem Grundkörper (4) abgestützte und radial bewegbare Zentrierungseinrichtung (11) vorgesehen ist,
- **dass** durch jede Zentriereinrichtung (11) eine unmittelbar auf das einzuspannende Werkstück (2) einwirkende radial gerichtete Kraft (F_{z}) einstellbar ist, durch die das Spiel (23, 23', 23") ausgeglichen ist,
- und **dass** die Zentriereinrichtungen (11) gemeinsam synchron oder unabhängig voneinander und/oder unabhängig zu den Spannbacken (6, 7, 8) betätigbar sind.

2. Spannfutter nach Anspruch 1,
**dadurch gekennzeichnet,**
**dass** die Zentriereinrichtungen (11) jeweils eine auf das Werkstück (2) zugewandte Zentrierfläche (16) aufweisen, dass die Zentrierflächen (16) der Zentriereinrichtungen (11) auf einer gemeinsamen Kreisbahn (17) angeordnet sind, die einen größeren Radius als der Außenradius des Werkstückes (2) aufweist und dass die Zentrierfläche (16) mittels eines Zentrierstiftes (15) relativ zu der Zentriereinrichtung (11) bewegbar ist.

3. Spannfutter nach Anspruch 1,
**dadurch gekennzeichnet,**
**dass** das Werkstück (2') als Hohlkörper ausgebildet ist, dass die Spannbacken von außen oder von innen auf dem Werkstück (2') anliegen, dass die Zentriereinrichtung (11) eine Radialkraft (F_{z}) auf die Innenfläche des Werkstückes (2') ausüben und dass die Zentriereinrichtungen (11) durch das Werkstück (2') zu deren Betätigung zugänglich sind oder dass die Zentriereinrichtungen (11) elektrisch, hydraulisch oder pneumatisch von außen bewegbar sind.

4. Spannfutter nach Anspruch 3,
**dadurch gekennzeichnet,**
**dass** die Zentriereinrichtungen (11) eine Zentrierfläche (16) aufweisen, die auf einer gemeinsamen Kreisbahn (17) angeordnet sind, die einen kleineren Radius als der Innenradius des Werkstückes (2') aufweist.

5. Spannfutter nach Anspruch 2,
**dadurch gekennzeichnet,**
**dass** die Zentriereinrichtung (11) aus einem Gehäuse (12) besteht, dass das Gehäuse (12) an dem Grundkörper (4) lösbar angebracht ist und dass das Gehäuse (12) in unterschiedliche Winkelpositionen und/oder in verschiedenartige Abstandslagen bezogen auf die Längsachse (5) des Grundkörpers (4) an diesem anbringbar ist.

6. Spannfutter nach Anspruch 1,
**dadurch gekennzeichnet,**
**dass** der Zentrierstift (15) mit einem Keil (31) zusammenwirkt und dass der Keil (31) eine Spannfläche (32) aufweist, durch die beim Einschieben des Keils (31) eine radial gerichtete Zentrierkraft (F_{z}) entsteht, die auf den Zentrierstift (15) einwirkt.

7. Spannfutter nach Anspruch 1,
**dadurch gekennzeichnet,**
**dass** der Zentrierstift (15) als Gewindespindel (36) ausgebildet ist, die radial in einem in dem Gehäuse (12) der Zentriereinrichtung (11) eingearbeiteten Innengewinde (35) angeordnet ist und relativ zu dem Gehäuse (12) bewegbar ist.

8. Spannfutter nach Anspruch 1,
**dadurch gekennzeichnet,**
**dass** der Zentrierstift (15) mittels eines hydraulisch oder pneumatisch angetriebenen Kolbens (33) betätigbar ist.

## Claims

1. A manually operated chuck (1, 1') for machine tools for machining of rotationally symmetrical workpieces (2) involving cutting,
- with a base body (4) that can be attached to the machine tool, with clamping jaws (6, 7, 8) held in a radially movable arrangement on the base body (4) for securing the workpiece (2) and in which an opening (25) is worked running at right angles to the longitudinal axis (5) of the base body (4),
- with a threaded spindle (24) mounted in the opening (25) in a movable arrangement, in which case the threaded spindle can be accessed from the outside in order to change its position,
- with a wedge bar (9) arranged in the base body (4) in the area of the threaded spindle (24), in which case the wedge bar (9) is connected to the threaded spindle (24) and one of the clamping jaws (6) in a shape-locking arrangement,
- with a driving ring (21) mounted in the base body (4) in a rotating arrangement, in which case the driving ring z21 is connected in a shape-locking arrangement to the threaded spindle (24) and to one further of the wedge bars (9) allocated to two other clamping jaws (7, 8), and
- with a specified play (23, 23', 23") between the threaded spindle (24) and the driving ring (21) and/or the threaded spindle (24) and one of the wedge bars (9) and/or between the driving ring (21) and the corresponding wedge bars (9) of the clamping jaws (7, 8),
**characterised in that,**
- at least one centring device (11) supported on the base body (4) and movable radially is provided laterally offset two one or morse of the clamping jaws (6, 7 or 8) or the camping jaws (6, 7 and 8),
- that each centring device (11) exerts a radially vectored force (F_{z}) acting directly on the workpiece (2) to be dampen, which can be adjusted, by means of which the play (23, 23', 23") is compensated,
- and that the centring devices (11) can be actuated jointly synchronously or independently from one another and/or independently from the clamping jaws (6, 7, 8).

2. The chuck in accordance with Claim 1,
**characterised in that,**
each of the centring devices (11) has a centring surface (16) directed towards the workpiece (2), that the centring surfaces (16) of the centring devices (11) are arranged in a common arc (17) which has a larger radius than the outside radius of the workpiece (2), and that the centring surface (16) can be moved relative to the centring device (11) by means of a centring pin (15).

3. The chuck in accordance with Claim 1,
**characterised in that,**
the workpiece (2') is configured as a hollow body, that the clamping jaws make contact with the workpiece (2') from the outside or the inside, that the centring device (11) exerts a radial force (F_{z}) on the inside of the workpiece (2') and that the centring devices (11) can be accessed through the workpiece (2') in order for them to be actuated, or that the centring devices (11) can be moved electrically, hydraulically or pneumatically from the outside.

4. The chuck in accordance with Claim 3,
**characterised in that,**
the centring devices (11) have centring surfaces (16) which are arranged on a common arc (17) which has a smaller radius that the inside radius of the workpiece (2').

5. The chuck in accordance with Claim 2,
**characterised in that,**
the centring device (11) consists of a housing (12), that the housing (12) is attached to the base body (4) in a releasable connection and that the housing (12) can be attached to the base body (4) in different angular positions and/or in different kinds of spacing positions in relation to the longitudinal axis (5) of the base body (4).

6. The chuck in accordance with Claim 1',
**characterised in that,**
the centring pin (15) acts in conjunction with a wedge (31) and that the wedge (31) has a clamping surface (32) by means of which a radially vectored centring force (F_{z}) results when the wedge (31) is pushed in, and this centring force (F_{z}) acts on the centring pin (15).

7. The chuck in accordance with Claim 1,
**characterised in that,**
the centring pin (15) is configured as a threaded spindle (36) which is radially arranged in a female thread (35) worked into the housing (12) of the centring device (11) and can be moved relative to the housing (12).

8. The chuck in accordance with Claim 1,
**characterised in that,**
the centring pin (15) can be actuated by means of a hydraulically or pneumatically driven piston (33).

## Revendications

1. Mandrin de serrage manuel (1, 1') pour machines-outils servant à l'usinage par enlèvement de copeaux de pièces à usiner à symétrie de rotation (2),
- comprenant un corps de base (4) qui se laisse fixer sur la machine-outil, sur lequel sont prévus des mors de serrage radialement déplaçables (6, 7, 8) pour le positionnement de la pièce à usiner (2) et dans lequel il est pratiqué un évidement (25) s'étendant perpendiculairement à l'axe longitudinal (5) du corps de base (4),
- comprenant une broche filetée (24) logée de manière déplaçable dans l'évidement (25), la broche étant accessible de l'extérieur en vue du changement de sa position,
- comprenant une crémaillère (9) disposée au niveau de la broche filetée (24) dans le corps de base (4), qui est connectée par la force et la forme avec la broche filetée (24) et avec un des mors de serrage (6)
- comprenant un anneau d'entraînement (21) logé en rotation dans le corps de base (4) et qui est connecté par la force et par la forme avec la broche filetée (24) et avec respectivement une autre des crémaillères (9) assignées aux deux autres mors de serrage (7, 8), et
- comprenant un jeu déterminé (23, 23', 23") entre la broche filetée (24) et l'anneau d'entraînement (21) et/ou entre la broche filetée (24) et une des crémaillères (9) et/ou entre l'anneau d'entraînement (21) et les crémaillères respectives (9) des mors de serrage (7, 8),
**caractérisé en ce que**
- sur le côté d'un ou de plusieurs mors de serrage (6, 7 ou 8) ou des mors de serrage (6, 7 et 8), il est prévu respectivement au moins un équipement de centrage (11) radialement déplaçable et s'appuyant sur le corps de base (4),
- par chaque équipement de centrage (11), il se laisse régler une force radiale (F_{z}) agissant directement sur la pièce à usiner serrée (2), qui assure l'équilibrage du jeu (23, 23', 23"), et que
- les équipements de centrage (11) se laissent actionner synchronisés ensemble ou indépendamment l'un de l'autre et/ou indépendamment des mors de serrage (6, 7, 8).

2. Mandrin de serrage d'après la revendication 1,
**caractérisé en ce que**
les équipements de centrage (11) comportent respectivement une face de centrage (16) donnant sur la pièce à usiner (2), que les faces de centrage (16) des équipements de centrage (11) sont disposées sur une trajectoire circulaire commune (17) dont le rayon est supérieur au rayon extérieur de la pièce à usiner (2) et que, moyennant un goujon de centrage (15), la face de centrage (16) se laisse déplacer relativement à l'équipement de centrage (11).

3. Mandrin de serrage d'après la revendication 1,
**caractérisé en ce que**
la pièce à usiner (2') est un corps creux, que les mors de serrage portent de l'extérieur ou de l'intérieur sur la pièce à usiner (2'), que l'équipement de centrage (11) exerce une force radiale (F_{z}) sur la face intérieure de la pièce à usiner (2'), et qu'en vue de leur actionnement, les équipements de centrage (11) sont accessibles à travers la pièce à usiner (2') ou que les équipements de centrage (11) se laissent régler de l'extérieur de manière électrique, hydraulique ou pneumatique.

4. Mandrin de serrage d'après la revendication 3,
**caractérisé en ce que**
les équipements de centrage (11) comportent des faces de centrage (16) disposées sur une trajectoire circulaire commune (17) dont le rayon est inférieur au rayon intérieur de la pièce à usiner (2').

5. Mandrin de serrage d'après la revendication 2,
**caractérisé en ce que**
l'équipement de centrage (11) consiste en un boîtier (12), que le boîtier (12) est monté de manière détachable sur le corps de base (4) et que, relativement à l'axe longitudinal (5) du corps de base (4), le boîtier (12) se laisser monter sur celui-ci dans diverses positions angulaires et/ou divers écartements de celui-ci.

6. Mandrin de serrage d'après la revendication 1,
**caractérisé en ce que**
le goujon de centrage (15), collabore avec un coin (31) et que le coin (31) comporte une face de serrage (32) qui, à l'insertion du coin (31), provoque une force de centrage radiale (F_{z}) agissant su le goujon de centrage (15).

7. Mandrin de serrage d'après la revendication 1,
**caractérisé en ce que**
le goujon de centrage (15) est conçu sous la forme d'une broche filetée (36) qui est disposée radialement dans un taraudage (35) pratiqué dans le boîtier (12) de l'équipement de centrage (11), et qui se laisse déplacer relativement au boîtier (12).

8. Mandrin de serrage d'après la revendication 1,
**caractérisé en ce que**
le goujon de centrage (15) se laisse actionner à l'aide d'un piston (33) à actionnement hydraulique ou pneumatique.
